(19) Europäisches Patentamt
European Patent Office
Office européen des brevets

(11) **EP 4 454 765 A1**

(12) **EUROPEAN PATENT APPLICATION**
published in accordance with Art. 153(4) EPC

(43) Date of publication:
**30.10.2024 Bulletin 2024/44**

(21) Application number: **22910625.7**

(22) Date of filing: **04.11.2022**

(51) International Patent Classification (IPC):
***B05D 3/00*** *(2006.01)* ***B05D 3/02*** *(2006.01)*
***B05D 7/24*** *(2006.01)* ***C08F 20/10*** *(2006.01)*
***C09D 201/06*** *(2006.01)* ***C09D 7/60*** *(2018.01)*
***C09D 7/65*** *(2018.01)*

(52) Cooperative Patent Classification (CPC):
**B05D 3/00; B05D 3/02; B05D 7/24; C08F 20/10; C09D 7/60; C09D 7/65; C09D 201/06**

(86) International application number:
**PCT/JP2022/041166**

(87) International publication number:
**WO 2023/119905 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 JP 2021211198**

(71) Applicant: **Nippon Paint Automotive Coatings Co., Ltd.**
**Hirakata-shi, Osaka 573-1153 (JP)**

(72) Inventor: **SAITO, Tomoki**
**Hirakata-shi, Osaka 573-1153 (JP)**

(74) Representative: **Mewburn Ellis LLP**
**Aurora Building**
**Counterslip**
**Bristol BS1 6BX (GB)**

(54) **AQUEOUS COATING COMPOSITION AND METHOD FOR PRODUCING COATED ARTICLE**

(57) Provided is a one-pack type water-borne coating composition that is superior in storage stability and water resistance and can be cured at low temperatures. A water-borne coating composition including an aqueous resin (A) having a hydroxy group and a carboxy group; a hydrophilicized carbodiimide compound (B); and a basic compound (C), wherein the aqueous resin (A) havs a glass transition point of 0°C or more and 20°C or less, the hydrophilicized carbodiimide compound (B) has, in a molecule, at least one carbodiimide group and a structure resulting from elimination of a hydroxy group from a polyalkylene glycol monoalkyl ether, the water-borne coating composition has a pH of 8.5 or more and less than 10, and the water-borne coating composition contains no polyisocyanate curing agent, or containing less than 1 part by mass of a polyisocyanate curing agent based on 100 parts by mass of a solid content of the water-borne coating composition.

EP 4 454 765 A1

## Description

TECHNICAL FIELD

The present invention relates to a water-borne coating composition and a method for producing a coated article.

BACKGROUND ART

Conventionally, as a curing agent for a one-pack type water-borne coating material, a blocked isocyanate has been used from the viewpoint of physical properties of a resulting coating film. However, coating materials containing a blocked isocyanate may not have sufficient storage stability.

Patent Documents 1 and 2 propose the use of a carbodiimide compound as a curing agent for one-pack type water-borne coating materials or aqueous resin compositions.

PRIOR ART DOCUMENTS

PATENT DOCUMENTS

Patent Document 1: JP-A-2021-143320
Patent Document 2: JP-A-2018-104605

SUMMARY OF THE INVENTION

PROBLEMS TO BE SOLVED BY THE INVENTION

However, the water-borne coating material of Patent Document 1 is poor in storage stability. The aqueous resin composition of Patent Document 2 may be poor in water resistance. Furthermore, the water-borne coating composition of Patent Document 2 is used for disposable articles, and is not assumed to be used outdoors for a long period of time. The present invention has been devised in view of the above, and an object of the present invention is to provide a one-pack type water-borne coating composition that is superior in storage stability and can be cured at low temperatures, and a method for producing a coated article superior in water resistance.

SOLUTIONS TO THE PROBLEMS

In order to solve the above-described problems, the present invention provides the following embodiments.

[1] A one-pack type water-borne coating composition comprising:

an aqueous resin (A) having a hydroxy group and a carboxy group;
a hydrophilicized carbodiimide compound(B); and
a basic compound(C), wherein
the aqueous resin (A) has a glass transition point of 0°C or more and 20°C or less,
the hydrophilicized carbodiimide compound (B) has, in a molecule, at least one carbodiimide group and a structure resulting from elimination of a hydroxy group from a polyalkylene glycol monoalkyl ether,
the water-borne coating composition has a pH of 8.5 or more and less than 10, and
the water-borne coating composition contains no polyisocyanate curing agent, or contains less than 1 part by mass of a polyisocyanate curing agent based on 100 parts by mass of a solid content of the water-borne coating composition.

[2] The water-borne coating composition according to [1], wherein a content of the basic compound (C) is 1 part by mass or more and 10 parts by mass or less based on 100 parts by mass of the solid content of the water-borne coating composition.
[3] The water-borne coating composition according to [1] or [2], wherein the basic compound (C) has a boiling point of 180°C or lower.
[4] The water-borne coating composition according to any one of [1] to [3], wherein the basic compound (C) includes at least one compound selected from the group consisting of ammonia and amine compounds.

[5] The water-borne coating composition according to any one of [1] to [4], wherein the aqueous resin (A) has a hydroxyl value of 20 mg KOH/g or more and 100 mg KOH/g or less and an acid value of 5 mg KOH/g or more and 80 mg KOH/g or less in terms of resin solid content.

[6] The water-borne coating composition according to any one of [1] to [5], wherein a ratio: Ec/Ea of an equivalent Ec of carbodiimide groups of the hydrophilicized carbodiimide compound (B) to an equivalent Ea of acid groups of the aqueous resin (A) is 0.1 or more and 1.5 or less.

[7] The water-borne coating composition according to any one of [1] to [6], wherein a content of the aqueous resin (A) is 30 parts by mass or more and 75 parts by mass or less based on 100 parts by mass of the solid content of the water-borne coating composition.

[8] The water-borne coating composition according to any one of [1] to [7], wherein a content of the hydrophilicized carbodiimide compound (B) is 5 parts by mass or more and 15 parts by mass or less based on 100 parts by mass of the solid content of the water-borne coating composition.

[9] The water-borne coating composition according to any one of [1] to [8], wherein the hydrophilicized carbodiimide compound (B) has one or more structural units represented by the following general formula ($\alpha$):

-OCONH-X-Q-Y ($\alpha$)

wherein X is independently at each occurrence a bifunctional organic group containing at least one carbodiimide group, Y independently at each occurrence has a structure resulting from elimination of a hydroxy group from a polyalkylene glycol monoalkyl ether, and Q is -NHCOO- or -NHCONH-.

[10] The water-borne coating composition according to any one of [1] to [9],
wherein the hydrophilicized carbodiimide compound (B) includes at least one compound selected from the group consisting of:

a compound represented by the following general formula (I): [Chemical Formula 1]

**YOCONH-X-NHCOO-Z-OCONH-X-NHCOOY (I)**

wherein X independently at each occurrence represents a bifunctional organic group containing at least one carbodiimide group, Y independently at each occurrence represents a structure resulting from elimination of a hydroxy group from a polyalkylene glycol monoalkyl ether, and Z has a structure resulting from elimination of a hydroxy group from a bifunctional polyol having a number average molecular weight of 200 or more and 5000 or less,
a compound represented by the following general formula (II):

[Chemical Formula 2]

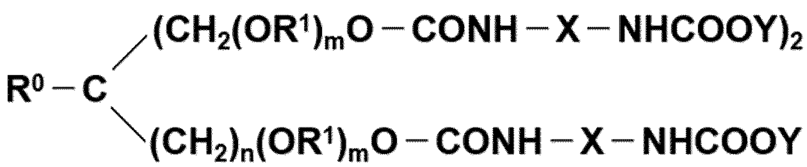

(II)

wherein X is independently at each occurrence a bifunctional organic group containing at least one carbodiimide group, Y independently at each occurrence has a structure resulting from elimination of a hydroxy group from a polyalkylene glycol monoalkyl ether, $R^0$ is hydrogen, a methyl group, or an ethyl group, $R^1$ is independently at each occurrence an alkylene group having 4 or less carbon atoms, n is 0 or 1, and m is 0 to 60; and
a compound represented by the following general formula (III):

[Chemical Formula 3]

**YOCONH—X—NHCOOY (III)**

wherein X is independently at each occurrence a bifunctional organic group containing at least one carbodiimide group, and Y independently at each occurrence has a structure resulting from elimination of a hydroxy group

from a polyalkylene glycol monoalkyl ether.

[11] A method for producing a coated article, the method comprising:

applying the water-borne coating composition according to any one of [1] to [10] to an article to be coated to form an uncured coating film; and
heating the uncured coating film at a temperature of 75°C or more and 100°C or less to obtain a cured coating film.

EFFECTS OF THE INVENTION

In accordance with the present invention, a one-pack type water-borne coating composition that is superior in storage stability and can be cured at low temperatures, and a method for producing a coated article superior in water resistance are provided.

DETAILED DESCRIPTION

[Aqueous coating composition]

In the present embodiment, a carbodiimide compound is used as a curing agent for an aqueous resin, and a basic compound is used in combination. Since carboxy groups of the aqueous resin is neutralized by the basic compound, a reaction with the carbodiimide compound is inhibited.
Furthermore, the pH of the water-borne coating composition is adjusted to 8.5 or more and less than 10. When the pH is 8.5 or more, a reaction of carboxy groups of the aqueous resin in the water-borne coating composition is inhibited, and the water-borne coating composition is kept stable for a long period of time (for example, one month or more).
When the pH of the water-borne coating composition is less than 10, the influence on the components contained in the water-borne coating composition is reduced, and a desired coating film is obtained. For example, when the pH is less than 10, blackening of aluminum scales that can be contained as a luster pigment is inhibited.
In addition, the glass transition point (Tg) of the aqueous resin is set to 0°C or more and 20°C or less. This makes it possible to improve the physical properties of a resulting coating film while ensuring the low-temperature curability in a system using the carbodiimide compound as a curing agent. For example, the water-borne coating composition according to the present embodiment can be cured at a low temperature (for example, 100°C or lower), and a resulting coating film has superior water resistance.
That is, the water-borne coating composition according to the present embodiment is of a one-pack type and comprises an aqueous resin (A) having a hydroxy group and a carboxy group, a hydrophilicized carbodiimide compound (B), and a basic compound (C). The glass transition point of the aqueous resin (A) is 0°C or more and 20°C or less. The pH of the water-borne coating composition is 8.5 or more and less than 10.
The hydrophilicized carbodiimide compound (B) has, in the molecule, at least one carbodiimide group and a structure resulting from elimination of a hydroxy group from a polyalkylene glycol monoalkyl ether.
The water-borne coating composition contains no polyisocyanate curing agent, or contains less than 1 part by mass of a polyisocyanate curing agent based on 100 parts by mass of the solid content of the water-borne coating composition. The polyisocyanate curing agent can react with a hydroxy group of the aqueous resin. Since almost no such curing agent is contained, the storage stability is further improved.
The water-borne coating composition according to the present embodiment can be used even after being stored, for example, at normal temperature (between 20°C and 25°C) for about one month or more and two months after preparation, and can form a coating film superior in water resistance.
The pH of the water-borne coating composition may be 9.9 or less, and 9.8 or less. Common aqueous coating materials have a pH of about 8.0. The adjustment of pH is carried out with a basic compound.
The solid concentration of the water-borne coating composition is not limited. The solid concentration of the water-borne coating composition may be, for example, 15 mass% or more and 60 mass% or less.
The water-borne coating composition according to the present embodiment is suitable for forming a colored coating film. The colored coating film may be a so-called intermediate coating film having one layer or two or more layers, may be a so-called base coating film having one layer or two or more layers, and may be a combination thereof.
(A) Aqueous resin having hydroxy group and carboxyl group
Aqueous resin is any resin that can be dissolved in water or any resin that can be dispersed in water. The resin to be used in the present embodiment has a carboxy group, and thus has solubility in water or dispersibility in water. The aqueous resin (A) may be dispersibility in water.
The volume average particle size of the aqueous resin (A) dispersed in an aqueous medium is, for example, 0.01 μm or more and 1 μm or less. Within this range, the aqueous resin can be stably dispersed in water, and the

appearance of a resulting coating film can be improved. The volume average particle size of the aqueous resin (A) is adjusted by the composition of starting monomers and/or polymerization conditions.

Carboxy groups of the aqueous resin (A) react with the hydrophilicized carbodiimide compound (B) to form a crosslinked structure. As a result, coating film performance (especially, water resistance) is improved.

The Tg of the aqueous resin (A) is 0°C or more and 20°C or less. When the Tg of the aqueous resin (A) is excessively low, a component having a small molecular weight such as water easily permeates a coating film, and water resistance is deteriorated. Furthermore, the strength of a resulting coating film decreases, or it becomes difficult to form a coating film. When the Tg of the aqueous resin (A) is excessively high, volume shrinkage in a cooling step after curing increases, so that internal stress is generated. The internal stress lowers the adhesion of the coating film. In particular, when the Tg of the aqueous resin (A) is higher than the curing temperature, the stress is hardly relaxed, and thus the coating film may be broken. Therefore, in a water-borne coating composition curable at low temperatures, setting of the Tg of a coating film-forming resin is important. When the Tg of the aqueous resin (A) is 0°C or more and 20°C or less, a coating film capable of being cured at low temperatures and superior in water resistance is obtained.

The Tg of the aqueous resin (A) may be 3°C or more, and may be 5°C or more. The Tg of the aqueous resin (A) may be 18°C or less, and may be 15°C or less.

The Tg of the aqueous resin (A) can be determined by calculation from the type and amount of the starting monomers. The Tg of the aqueous resin (A) can be measured with a differential scanning calorimeter (DSC).

The aqueous resin (A) has, for example, a hydroxyl value of 20 mg KOH/g or more and 100 mg KOH/g or less in terms of resin solid content. This is for imparting adhesion to an article to be coated. The hydroxyl value may be 30 mg KOH/g or more and may be 80 mg KOH/g or less.

The aqueous resin (A) has, for example, an acid value of 5 mg KOH/g or more and 80 mg KOH/g or less in terms of resin solid content. As a result, the reaction efficiency with the hydrophilicized carbodiimide compound (B) can be improved, and the storage stability is more easily enhanced. The acid value may be 10 mg KOH/g or more and may be 60 mg KOH/g or less.

The number average molecular weight of the aqueous resin (A) is, for example, 50000 or more. The number average molecular weight of the aqueous resin (A) may be 200000 or more, and may be 300000 or more.

The number average molecular weight is measured by gel permeation chromatography (GPC) using a polystyrene standard sample reference.

The content of the aqueous resin (A) is, for example, 30 parts by mass or more and 75 parts by mass or less based on 100 parts by mass of the solid content of the water-borne coating composition. When an aqueous resin having a relatively large molecular weight accounts for a large proportion of the solid content, migration of the constituent during formation of a coating film is likely to be inhibited. As a result, formation of irregularities is inhibited, and designability can be improved.

The content of the aqueous resin (A) may be 40 parts by mass or more, and may be 50 parts by mass or more based on 100 parts by mass of the solid content of the water-borne coating composition. The content of the aqueous resin (A) may be 95 parts by mass or less, and may be 90 parts by mass or less based on 100 parts by mass of the solid content of the water-borne coating composition.

The total content of the constituents having a number average molecular weight of 100000 or more (hereinafter referred to as high molecular weight components), such as the aqueous resin (A), may be 60 parts by mass or more and 95 parts by mass or less based on 100 parts by mass of the solid content of the water-borne coating composition.

From the viewpoint of designability, it is desirable that the content of constituents having a small molecular weight is small. For example, the content of the constituents having a number average molecular weight of 1000 or less (hereinafter referred to as low molecular weight component) may be 30 parts by mass or less, may be 20 parts by mass or less, and may be 10 parts by mass or less based on 100 parts by mass of the solid content of the water-borne coating composition.

The type of the aqueous resin (A) is not limited. The aqueous resin (A) may be a single resin or may be a mixture of different types of resins. The aqueous resin (A) may be at least one of an acrylic resin and a polyester resin both having a hydroxy group and a carboxy group in terms of easy production or availability. From the viewpoint of easy adjustment of physical properties of a coating film, the aqueous resin (A) may contain at least the acrylic resin.

When the water-borne coating composition is for intermediate coating, for example, a mixture of the acrylic resin and the polyester resin is used as the aqueous resin (A). The ratio of the acrylic resin to the polyester resin may be acrylic resin/polyester resin = 5/1 to 1/1. When the water-borne coating composition is for a base, for example, the acrylic resin is used as the aqueous resin (A).

(Acrylic resin having hydroxy group and carboxy group)

The acrylic resin having a hydroxy group and a carboxy group is obtained, for example, by acrylic copolymerization of an $\alpha,\beta$-ethylenically unsaturated monomer having a hydroxy group (hereinafter sometimes referred to as first

monomer) and an α,β-ethylenically unsaturated monomer having a carboxy group (hereinafter sometimes referred to as second monomer).

Examples of the first monomer include 2-hydroxyethyl (meth)acrylate, 2-hydroxypropyl (meth)acrylate, 4-hydroxybutyl (meth)acrylate, allyl alcohol, methacryl alcohol, and an adduct of hydroxyethyl (meth)acrylate and ε-caprolactone. The first monomer may be at least one monomer selected from the group consisting of 2-hydroxyethyl (meth)acrylate, 4-hydroxybutyl (meth)acrylate, and an adduct of 2-hydroxyethyl (meth)acrylate and ε-caprolactone.

"(Meth)acrylic" means both acrylic and methacrylic.

Examples of the second monomer include acrylic acid, methacrylic acid, acrylic acid dimer, crotonic acid, 2-acryloyloxyethylphthalic acid, 2-acryloyloxyethylsuccinic acid, ω-carboxy-polycaprolactone mono(meth)acrylate, maleic acid, fumaric acid, and itaconic acid. The second monomer may be acrylic acid and/or methacrylic acid.

In the acrylic copolymerization, other α, β-ethylenically unsaturated monomers (hereinafter, sometimes referred to as third monomer) may be used, as necessary. Examples of the third monomer include (meth)acrylic acid esters (e.g., methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, lauryl methacrylate, phenyl acrylate, isobornyl (meth)acrylate, cyclohexyl methacrylate, (meth)acrylic acid tert-butyl cyclohexyl, dicyclopentadienyl (meth)acrylate, and dihydrodicyclopentadienyl (meth)acrylate), and polymerizable amide compounds (e.g., (meth)acrylamide, N-methylol(meth)acrylamide, and N-butoxymethyl(meth)acrylamide).

The preparation method of the aqueous resin (A) is not limited. Examples of the preparation method of the aqueous resin (A) include a method in which a polymer is obtained via solution polymerization and then made aqueous, and a method in which emulsion polymerization is carried out in an aqueous medium to afford an emulsion.

<Solution polymerization>

The solution polymerization is performed, for example, by adding dropwise a mixture of the first and second monomers together with a polymerization initiator into a stirred solvent under heating conditions. The solution polymerization is performed, for example, under conditions including a temperature of 60°C to 160°C and a dropping time of 0.5 hours to 10 hours. The first and second monomers may be polymerized in two stages.

The polymerization initiator is not limited as long as it is one used for common polymerization. Examples thereof include azo compounds and peroxides. The amount of the polymerization initiator based on 100 parts by mass of the monomer mixture is, for example, 0.1 parts by mass or more and 18 parts by mass or less, and may be 0.3 parts by mass or more and 12 parts by mass or less.

The solvent is not limited as long as it does not adversely affect the reaction. Examples of the solvent include alcohols, ketones, ethers, and hydrocarbon solvents.

In addition, a chain transfer agent may be added to adjust the molecular weight. Examples of the chain transfer agent include mercaptans such as lauryl mercaptan and a-methylstyrene dimer.

The acrylic resin obtained by solution polymerization is neutralized with a basic compound. As a result, an acrylic resin dispersibility in water is obtained. As the basic compound, those described later can be used. In particular, the basic compound for water-dispersibilization may be ammonia, methylamine, ethylamine, dimethylamine, diethylamine, trimethylamine, triethylamine, dimethylethanolamine, diethanolamine, diethylaminoethanol, or triethanolamine. The basic compound is added, for example, in such an amount that the neutralization rate of the carboxy groups of the acrylic resin obtained via solution polymerization is 60% or more and 100% or less. When the neutralization rate is in this range, dispersibility in water is improved.

The neutralization rate has the same meaning as the use equivalent of the basic compound with respect to the carboxy groups. The use equivalent of the basic compound is calculated by the following formula.

$$\text{Neutralization rate (mol\%)} = 100 \times \frac{\text{Mass (g) of basic compound/Equivalent of basic compound}}{\text{Acid value (mg KOH/g) of aqueous resin} \times \text{Mass (g) of aqueous resin}/56.1 \times 1000}$$

The neutralization of carboxy groups is a treatment that is commonly performed for making a carboxy group-containing resin aqueous. However, the aqueous resin thus neutralized is used for a water-borne coating composition having a pH of about 8.0. When the pH is about 8.0, it is difficult to maintain a carboxy group in a neutralized state (for example, $-COO^{-}NH_4^{+}$), and it cannot be expected to improve the storage stability.

<Emulsion polymerization>

The emulsion polymerization is performed by, for example, dissolving an emulsifier in water or an aqueous medium containing an organic solvent such as alcohol as necessary under heating conditions, and then adding dropwise a mixture of the first and second monomers together with a polymerization initiator while heating and stirring the emulsifier solution. The mixture of monomers may be emulsified beforehand using an emulsifier and water.

When emulsion polymerization is performed, a crosslinkable monomer can be used as the third monomer. The crosslinkable monomer has two or more radically polymerizable, ethylenically unsaturated groups in the molecule. Examples thereof include divinylbenzene, allyl (meth)acrylate, and ethylene glycol di(meth)acrylate.

Examples of the polymerization initiator include lipophilic azo compounds such as azobisisobutyronitrile, 2,2'-azobis(2-methylbutyronitrile, and 2,2'-azobis(2,4-dimethylvaleronitrile); hydrophilic compounds such as 4,4'-azobis(4-cyanovaleric acid) and 2,2-azobis(N-(2-carboxyethyl)-2-methylpropionamidine, which are anionic, and 2,2'-azobis(2-methylpropionamidine), which is cationic; redox-type lipophilic peroxides such as benzoyl peroxide, parachlorobenzoyl peroxide, lauroyl peroxide, and t-butyl perbenzoate; and hydrophilic peroxides such as potassium persulfate and ammonium persulfate.

As the emulsifier, common emulsifiers that a person skilled in the art usually uses may be used. Examples of the emulsifier include reactive emulsifiers such as Antox MS-60 (produced by Nippon Nyukazai Co., Ltd.), Eleminol JS-2 (produced by Sanyo Chemical Industries, Ltd.), ADEKA REASOAP NE-20 (produced by ADEKA, Inc.), Aqualon HS-10 (produced by Dai-Ichi Kogyo Seiyaku Co., Ltd.), and LATEMLTL PD-104 (produced by Kao Corporation). In addition, the chain transfer agent described above may be added to adjust the molecular weight.

The reaction temperature is set according to the polymerization initiator. For example, when an azo initiator or a peroxide is used, the reaction temperature may be 60°C to 90°C, and when a redox type initiator is used, the reaction temperature may be 30°C to 70°C. The reaction time is, for example, 1 hour to 8 hours. The amount of the polymerization initiator may be 0.1 parts by mass or more and 5 parts by mass or less based on 100 parts by mass of the monomer mixture. The emulsion polymerization may be performed in multiple stages or in two stages. For example, a part of the monomer mixture may be subjected to emulsion polymerization, and the remainder of the monomer mixture may be added thereto, followed by further emulsion polymerization.

(Polyester resin having hydroxy group and carboxy group)

The polyester resin having a hydroxy group and a carboxy group is obtained, for example, via a condensation reaction of a polyhydric alcohol component and a polybasic acid component. The polyester resin obtained is made aqueous by neutralization with the basic compound described above.

Examples of the polyhydric alcohol component include ethylene glycol, diethylene glycol, propylene glycol, 1,3-propanediol, 1,4-butanediol, 1,5-pentanediol, 1,6-hexanediol, 2,2-diethyl-1,3-propanediol, neopentyl glycol, 1,9-nonanediol, 1,4-cyclohexanediol, hydroxycarboxylic acid components such as neopentyl glycol hydroxypivalate ester, 2-butyl-2-ethyl-1,3-propanediol, 3-methyl-1,5-pentanediol, and 2,2,4-trimethylpentanediol.

Examples of the polybasic acid component include aromatic polycarboxylic acids such as phthalic anhydride, isophthalic acid, terephthalic acid, trimellitic anhydride, tetrachlorophthalic anhydride, pyromellitic anhydride and anhydrides thereof; alicyclic polycarboxylic acids such as hexahydrophthalic anhydride, tetrahydrophthalic anhydride, 1,4- and 1,3-cyclohexanedicarboxylic acids and anhydrides thereof; aliphatic polycarboxylic acids such as maleic anhydride, fumaric acid, succinic anhydride, adipic acid, sebacic acid and anhydrides thereof.

A monobasic acid such as benzoic acid and tert-butylbenzoic acid may be used together, as necessary.

Monohydric alcohols, monoepoxide compounds such as CARDURA E (trade name, produced by Shell Chemical), and lactones (β-propiolactone, dimethylpropiolactone, butyrolactone, γ-valerolactone, ε-caprolactone, γ-caprolactone, etc.) may be used together as reaction components.

Furthermore, fatty acids such as castor oil and dehydrated castor oil, and one or a mixture of two or more of these fatty acids may be added to the reaction system.

The polyester resin may be grafted with an acrylic resin and/or a vinyl resin, and may be reacted with a polyisocyanate compound.

(Urethane resin having hydroxy group and carboxy group)

As the aqueous resin (A), an aqueous polyurethane resin may be used together with an acrylic resin and/or a polyester resin. The aqueous polyurethane resin also has a hydroxy group and a carboxy group.

The content of the aqueous polyurethane resin is appropriately set according to the type of a coating film. When the water-borne coating composition is for intermediate coating, the content of the aqueous polyurethane resin may be 30 parts by mass or more and 40 parts by mass or less based on 100 parts by mass of the solid content of the water-borne coating composition. When the water-borne coating composition is for a base, the content of the aqueous polyurethane resin may be 15 parts by mass or more and 30 parts by mass or less based on 100 parts by mass of the solid content of the water-borne coating composition.

(Other resins)

The water-borne coating composition may contain another resin that does not have either or both of a hydroxy group and a carboxyl group. Examples of the other resin include resins having a hydroxy group, such as polyether diol and polycarbonate diol, melamine resin having a methylol group, and a resin having a phosphate group.

The content of the other resin is appropriately set according to the type of a coating film. When the water-borne coating composition is for a base, the content of the other resin may be 15 parts by mass or more and 45 parts by mass or less based on 100 parts by mass of the solid content of the water-borne coating composition.

However, it is desirable that the content of a resin having only a hydroxy group is small. Such a resin does not contribute to curing, and therefore is prone to deteriorate the physical properties of a coating film.

(B) Hydrophilicized carbodiimide compound

The hydrophilicized carbodiimide compound (B) has, in the molecule, at least one carbodiimide group and a structure resulting from elimination of a hydroxy group from a polyalkylene glycol monoalkyl ether.

The hydrophilicized carbodiimide compound (B) has, for example, a structural unit represented by the following formula ($\alpha$) (hereinafter referred to as structural unit $\alpha$):

-OCONH-X-Q-Y ($\alpha$)

wherein X is independently at each occurrence a bifunctional organic group containing at least one carbodiimide group, Y independently at each occurrence has a structure resulting from elimination of a hydroxy group from a polyalkylene glycol monoalkyl ether, and Q is -NHCOO- or -NHCONH-.

The structural unit $\alpha$ improves dispersibility in water and curability. It is just required that one or more structural units $\alpha$ be present in one molecule. The number of constituent units $\alpha$ may be one, two, or three in one molecule.

X is represented by, for example, the following general formula (a).

[Chemical Formula 4]

$$-R^2-(N=C=N-R^2)_p- \quad \cdots (a)$$

In the formula, $R^2$ is a hydrocarbon group having 6 to 15 carbon atoms. Examples of $R^2$ include a phenylene group, a diphenylenemethyl group, a diphenylene(dimethyl)methyl group, a methylphenylene group, a dimethylphenylene group, a tetramethylxylylene group, a hexylene group, a cyclohexylene group, and a dicyclohexylenemethyl group. $R^2$ may be a dicyclohexylenemethyl group.

p is 1 to 10. p is the number of carbodiimide groups present in the structural unit. From the viewpoint of curability, p may be 2 or more and may be 8 or less.

The number of repetitions (for example, p described above) is an average value.

Y is represented by, for example, the following general formula (b) or (c).

[Chemical Formula 5]

$$R^3-(OCH_2-CHR^4)_q-O- \quad (b)$$

$$R^3-(OCHR^4-CH_2)_q-O- \quad (c)$$

In the formulas, $R^3$ is an alkyl group having 1 to 20 carbon atoms. Examples of $R^3$ include a methyl group, an ethyl group, a butyl group, a hexyl group, an octyl group, a decyl group, a dodecyl group, and a stearyl group. From the

viewpoint of dispersibility in water, $R^3$ may be a methyl group.

$R^4$ is a hydrogen atom or a methyl group. From the viewpoint of dispersibility in water, $R^4$ may be a hydrogen atom. When $R^4$ is hydrogen, the general formulas (b) and (c) represent the same structure.

q is 4 to 40. From the viewpoint of dispersibility in water and reactivity after water volatilizes, q may be 4 to 20 or may be 6 to 12.

The ratio Ec/Ea of the equivalent Ec of the carbodiimide groups of the hydrophilicized carbodiimide compound (B) to the equivalent Ea of the acid groups of the aqueous resin (A) is, for example, 0.1 or more and 1.5 or less. When the equivalent ratio is in this range, the crosslinking density is increased, so that the water resistance can be further improved. The ratio Ec/Ea may be 0.5 or more, and may be 0.8 or more. The ratio Ec/Ea may be 1.4 or less, and may be 1.2 or less.

The content of the hydrophilicized carbodiimide compound (B) is, for example, 5 parts by mass or more and 15 parts by mass or less based on 100 parts by mass of the solid content of the water-borne coating composition. When the content of the hydrophilicized carbodiimide compound (B) is in this range, the water resistance of a coating film can be further improved, and shrinkage due to water is likely to be inhibited. The content may be 7 parts by mass or more, and may be 8 parts by mass or more based on 100 parts by mass of the solid content of the water-borne coating composition. The content may be 14 parts by mass or less, and may be 13 parts by mass or less based on 100 parts by mass of the solid content of the water-borne coating composition.

(Hydrophilicized carbodiimide compound (I))

The hydrophilicized carbodiimide compound (B) having two structural units $\alpha$ is represented by, for example, the following general formula (I).

[Chemical Formula 6]

$$\text{YOCONH—X—NHCOO—Z—OCONH—X—NHCOOY} \qquad \text{(I)}$$

In the formula, X and Y have the same meaning as in the formula ($\alpha$).

Z has a structure resulting from elimination of a hydroxy group from a bifunctional polyol having a number average molecular weight of 200 or more and 5000 or less. Z constitutes a polymer having an ether linkage, an ester linkage, or a carbonate linkage, and is difficult to be represented by a general formula. As to details of Z, a synthesis method described later can be referred to.

<Synthesis method>

First, a starting carbodiimide compound having at least two isocyanate groups in its one molecule is reacted with a bifunctional polyol having hydroxy groups at its molecular ends and having a number average molecular weight of 200 or more and 5000 or less in such a ratio that the molar amount of the isocyanate groups of the starting carbodiimide compound is larger than the molar amount of the hydroxy groups of the polyol. Next, the obtained reaction product is reacted with a polyalkylene glycol monoalkyl ether. Thereby, the hydrophilicized carbodiimide compound (B) represented by the formula (I) is obtained.

From the viewpoint of reactivity, the starting carbodiimide compound preferably has isocyanate groups at both ends. A method for producing such a starting carbodiimide compound is well known to those skilled in the art and, for example, a condensation reaction accompanied by a decarboxylation of an organic diisocyanate can be utilized.

Examples of the organic diisocyanate include aromatic diisocyanates, aliphatic diisocyanates, alicyclic diisocyanates, and mixtures thereof. Examples thereof specifically include 1,5-naphthylene diisocyanate, 4,4-diphenylmethane diisocyanate, 4,4-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4-diisocyanate, methylcyclohexane diisocyanate, and tetramethylxylylene diisocyanate. From the viewpoint of reactivity, the organic diisocyanate may be dicyclohexylmethane-4,4-diisocyanate.

For the condensation reaction, a carbodiimidization catalyst is usually used. Examples of the carbodiimidization catalyst include phospholene oxides such as 1-phenyl-2-phospholene-1-oxide, 3-methyl-2-phospholene-1-oxide, 1-ethyl-2-phospholene-1-oxide, 3-methyl-1-phenyl-2-phospholene-1-oxide, and 3-phospholene isomers thereof. From the viewpoint of reactivity, the carbodiimidization catalyst may be 3-methyl-1-phenyl-2-phospholene-1-oxide.

Examples of the bifunctional polyol include polyether diols, polyester diols, and polycarbonate diols. Examples thereof specifically include polyalkylene glycols such as polyethylene glycol, polypropylene glycol, polyethylene propylene

glycol, polytetramethylene ether glycol, polyhexamethylene ether glycol, and polyoctamethylene ether glycol, polyester diols such as polyethylene adipate, polybutylene adipate, polyhexamethylene adipate, polyneopentyl adipate, poly-3-methylpentyl adipate, polyethylene/butylene adipate, and polyneopentyl/hexyl adipate, polylactone diols such as polycaprolactone diol and poly-3-methylvalerolactone diol, polycarbonate diols such as polyhexamethylenecarbonate diol, and mixtures thereof.

The ratio of the molar amount of the isocyanate groups of the starting carbodiimide compound to the molar amount of the hydroxy groups of the bifunctional polyol may be 1.0 : 1.1 to 1.0 : 2.0 from the viewpoint of reaction efficiency and economy. The degree of polymerization of the starting carbodiimide compound and the bifunctional polyol may be 1 to 10 from the viewpoint of reaction efficiency.

The reaction product thus obtained is further reacted with a polyalkylene glycol monoalkyl ether (hereinafter referred to as PAGAE). As a result, a hydrophilicized carbodiimide compound (B) having two structural units α is obtained.

PAGAE is represented by, for example, the following general formula (b') or (c').

[Chemical Formula 7]

$$R^3\!-\!\left(OCH_2\!-\!CHR^4\right)_q\!-\!OH \qquad (b')$$

$$R^3\!-\!\left(OCHR^4\!-\!CH_2\right)_q\!-\!OH \qquad (c')$$

wherein $R^3$, $R^4$, and q have the same meaning as described above.

The number average molecular weight of PAGAE may be 200 or more and 5000 or less. The number of the carbon atoms in the alkyl group of PAGAE may be 1 to 20. Examples of PAGAE include polyethylene glycol, polypropylene glycol, each having one end blocked with an alkyl group having 1 to 20 carbon atoms, or mixtures thereof. Examples of PAGAE specifically include polyethylene glycol monomethyl ether, polyethylene glycol mono-2-ethylhexyl ether, polyethylene glycol monolauryl ether, polypropylene glycol monomethyl ether, polypropylene glycol mono-2-ethylhexyl ether, and polypropylene glycol monolauryl ether, each having a number average molecular weight of 200 to 5000.

The reaction between the reaction product described above and PAGAE is carried out in such a ratio that the molar amount of the isocyanate groups of the reaction product is equal to or larger than the molar amount of the hydroxy groups of PAGAE. The molar amount of isocyanate groups is determined by direct measurement. The molar amount of isocyanate groups is also calculated from the charge amount.

In the reaction, a catalyst may be used. The reaction temperature is not particularly limited, but may be 60°C or more and 120°C or less from the viewpoint of control of the reaction system and reaction efficiency. The solvent may be an organic solvent that does not contain active hydrogen.

The hydrophilicized carbodiimide compound (B) produced via such a two-stage reaction may be a mixture of the compound represented by the general formula (I) and another reaction product. However, such a mixture may be regarded as a hydrophilicized carbodiimide compound (B) having the structure of the general formula (I).

(Hydrophilicized carbodiimide compound (II))

The hydrophilicized carbodiimide compound (B) having three structural units α is represented by, for example, the following general formula (II).

[Chemical Formula 8]

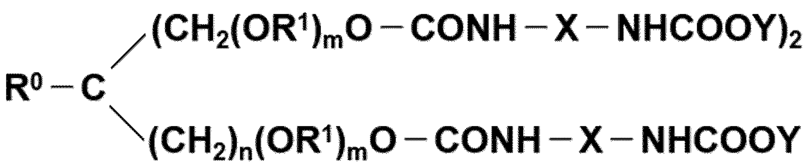

(II)

In the formula, X and Y have the same meaning as in the formula (α).

$R^0$ is hydrogen, a methyl group, or an ethyl group. $R^1$ independently at each occurrence represent an alkylene group having 4 or less carbon atoms. Specific examples thereof include a methylene group, an ethylene group, a

propylene group, and a butylene group. n is 0 or 1. m is independently at each occurrence represent 0 to 60.

$R^0$, $R^1$, n and m are determined depending on a trifunctional polyol to be used for the production of the hydrophilicized carbodiimide compound (B).

When m is 11 or more, the ratio of a hydrophilic section to a hydrophobic section is preferably 2.0 to 6.3. The ratio can be determined by dividing the molecular weight of the moiety of an oxymethylene group or an oxyethylene group existing in the carbodiimide compound by the molecular weight of the carbodiimide compound.

<Synthesis method>

First, the starting carbodiimide compound and the PAGAE both described above are reacted at such a ratio that the equivalent of the isocyanate groups of the starting carbodiimide compound is larger than the equivalent of the hydroxy groups of PAGAE. Next, the reaction product obtained is reacted with a trifunctional polyol. Thereby, the hydrophilicized carbodiimide compound (B) represented by the general formula (II) is obtained. The equivalent ratio of isocyanate groups to hydroxy groups may be 2/1.

The amount of the trifunctional polyol may be such an amount that the hydroxyl group equivalent is equal to or larger than the isocyanate equivalent in the reactant, and the isocyanate equivalent may be equal to the hydroxyl group equivalent. The isocyanate equivalent of the reaction product is determined by direct measurement. The molar amount of isocyanate groups is also calculated from the charge amount.

The reaction can generally be carried out under conditions well-known to those skilled in the art, and a tin-based catalyst may be used, if necessary. The reaction is carried out in the same manner as the hydrophilicized carbodiimide compound (B) represented by the general formula (I).

The trifunctional polyol is preferably trimethylolpropane, glycerol, or an alkylene oxide adduct of these because of its easy availability. Examples of the alkylene oxide include ethylene oxide and propylene oxide. An alkylene oxide adduct of glycerol is commercially available from Sanyo Chemical Industries, Ltd. as GP Series. In consideration of the curing reactivity of a hydrophilicized carbodiimide compound to be obtained, the trifunctional polyol may have a structure in which alkylene oxide is added to every hydroxy group. Among the GP series, for example, GP-250 and GP-3000 have such a structure.

The hydrophilicized carbodiimide compound (B) produced via such a two-stage reaction may be a mixture of a compound represented by the general formula (II) and another reaction product. However, such a mixture may be regarded as a hydrophilicized carbodiimide compound (B) having the structure of the general formula (II).

(Hydrophilicized carbodiimide compound (III))

The hydrophilicized carbodiimide compound (B) having one structural unit $\alpha$ is represented by, for example, the following general formula (III).

[Chemical Formula 9]

$$YOCONH-X-NHCOOY \qquad (III)$$

wherein X and Y have the same meaning as in the formula ($\alpha$).

Y may independently at each occurrence have a structure selected from the following (i) and (ii). As a result, dispersibility in water and stability can be improved, and the crosslinking density is likely to be further increased.

(i) Structure resulting from elimination of a hydroxy group from a polyethylene glycol monoalkyl ether in which an alkyl group having 1 to 3 carbon atoms is ether-linked to an end of a polyethylene oxide unit having a repeat number of 6 to 20.

(ii) Structure resulting from elimination of a hydroxy group from a polypropylene glycol monoalkyl ether in which an alkyl group having 1 to 8 carbon atoms is ether-linked to an end of a polypropylene oxide unit having a repeat number of 4 to 60.

Among them, Y may have the structure (ii), and the number of repetitions of the polypropylene oxide unit may be 15 to 60.

One Y may have the structure (i), and the other Y may have the structure (ii). At this time, the ratio of the number of Y having the structure (i) to the number of Y having the structure (ii) may be (i) : (ii) = 1 : 0.7 to 1 : 8.

From the viewpoint of inhibiting the deactivation of the carbodiimide by water and improving the water resistance of a coating film, it is desirable that the periphery of the carbodiimide group is hydrophobic to some extent and has a low degree of contact with water molecules. On the other hand, the carbodiimide compound itself is required to have hydrophilicity. When (i) : (ii) is in the above range, the hydrophobicity and the hydrophilicity are likely to be balanced. (i) : (ii) may be 1 : 0.7 to 1 : 1.5.

<Synthesis method>

The hydrophilicized carbodiimide compound (B) represented by the general formula (III) is obtained via a reaction of the starting carbodiimide compound with the same or different PAGAE.

The PAGAE may be at least one selected from the group consisting of the following (i') and (ii').

(i') Polyethylene glycol monoalkyl ether in which an alkyl group having 1 to 3 carbon atoms is ether-linked to an end of a polyethylene oxide unit having a repeat number of 6 to 20.

(ii') Polypropylene glycol monoalkyl ether in which an alkyl group having 1 to 8 carbon atoms is ether-linked to an end of a polypropylene oxide unit having a repeat number of 4 to 60.

Examples of (i') specifically include polyethylene glycol monomethyl ether, polyethylene glycol monoethyl ether, and polyethylene glycol monopropyl ether. In particular, (i') may be polyethylene glycol monomethyl ether.

Examples of (ii') specifically include polypropylene glycol monomethyl ether, polypropylene glycol monoethyl ether, polypropylene glycol monobutyl ether, and polypropylene glycol 2-ethylhexyl ether. In particular, (ii') may be polypropylene glycol monobutyl ether.

From the viewpoint of crosslinking density, the hydrophilicized carbodiimide compound (B) may be represented by the general formula (III).

(Other curing agents)

The water-borne coating composition may contain curing agents other than the hydrophilicized carbodiimide compound (B). Examples of such other curing agents include a polyisocyanate curing agent (including a blocked polyisocyanate curing agent), an amino resin, an epoxy compound, an aziridine compound, and an oxazoline compound.

It is noted that the content of the polyisocyanate curing agent is less than 1 part by mass and may be 0 part by mass based on 100 parts by mass of the solid content of the water-borne coating composition. This is because the polyisocyanate curing agent lowers storage stability. As described above, from the viewpoint of designability, it is desirable that the content of the curing agent corresponding to a low molecular weight component is also small.

(C) Basic compound

The basic compound is a compound that acts as a base as defined by Bronsted-Lowry. The basic compound receives a proton ($H^+$).

The basic compound neutralizes a carboxy group of the aqueous resin (A) in the water-borne coating composition. Therefore, the reaction between the aqueous resin (A) and the carbodiimide compound (B) is inhibited, and the storage stability and pot life are improved.

The content of the basic compound is not particularly limited as long as the pH of the water-borne coating composition is in the range of 8.5 or more and less than 10. The content of the basic compound may be, for example, 1.0 parts by mass or more, may be 1.2 parts by mass or more, and may be 1.4 parts by mass or more based on 100 parts by mass of the solid content of the water-borne coating composition. The content of the basic compound (C) may be, for example, 10.0 parts by mass or less, may be 7.0 parts by mass or less, and may be 5.0 parts by mass or less based on 100 parts by mass of the solid content of the water-borne coating composition.

After the water-borne coating composition is applied to an article to be coated, the basic compound is required to volatilize. Volatilization of the basic compound makes the carboxy groups of the aqueous resin capable of reacting with the carbodiimide compound. The boiling point of the basic compound is just required to be one as high as the basic compound can be volatilized by heat treatment performed after coating. The boiling point of the basic compound may be, for example, 180°C or less, may be 170°C or less, and may be 160°C or less. The boiling point of the basic compound is just required to be one as high as the basic compound does not volatilize during storage of the water-borne coating composition. The boiling point of the basic compound may be, for example, 60°C or more, may be 70°C or more, and may be 80°C or more.

The pKa (acid dissociation constant) of the basic compound is, for example, 5.0 or more. Owing to this, the reaction between the carbodiimide compound and the aqueous resin is more easily inhibited. The pKa of the basic

compound may be 7.0 or more and may be more than 8.5. The pKa of the basic compound is, for example, 30.0 or less. Owing to this, the water resistance of a resulting coating film is likely to be improved. The pKa of the basic compound may be 20.0 or less, and may be 15.0 or less. In one embodiment, the pKa of the basic compound is 5.0 or more and 30.0 or less. The pKa is a value attained when water is used as a solvent at 25°C.

The basic compound is not particularly limited, and includes, for example, at least one compound selected from the group consisting of ammonia (pKa 9.25) and amine compounds. Examples of the amine compound include dimethylamine (pKa 10.64), trimethylamine (pKa 9.76), ethylamine (pKa 10.63), diethylamine (pKa 10.98), triethylamine (pKa 10.7), n-propylamine (pKa 10.53), isopropylamine (pKa 10.63), triallylamine (pKa 8.3, boiling point 156°C), triethylenediamine (pKa 8.7, boiling point 174°C), N,N-dimethylethanolamine (boiling point: 135°C), N,N-diethylethanolamine, aminoethanolamine, N-methyl-N,N-diethanolamine, iminobispropylamine, 3-ethoxypropylamine, 3-diethylaminopropylamine, methylaminopropylamine, methyliminobispropylamine, 3-methoxypropylamine, monoethanolamine (pKa 9.5), diethanolamine, triethanolamine, morpholine (pKa 8.4, boiling point 129°C), allylmorpholine (pKa 7.1, boiling point 158°C) N-methylmorpholine (pKa 7.4, boiling point 116°C), and N-ethylmorpholine (pKa 7.7, boiling point 139°C). The basic compound is preferably N,N-dimethylethanolamine.

(Others)

The water-borne coating composition may contain a diluent component, a pigment, a curing catalyst, a surface conditioning agent, an antifoaming agent, a pigment dispersant, a plasticizer, a film-forming assistant, an ultraviolet absorber, an antioxidant, or a pH control agent, as necessary. The water-borne coating composition of the present invention can be prepared by mixing the respective components to constitute the water-borne coating composition with a means that is usually used.

[Method for producing coated article]

The water-borne coating composition according to the present embodiment can be cured at low temperatures. The coated article is produced, for example, by a method including a step of applying the water-borne coating composition according to the present embodiment to an article to be coated to form an uncured coating film, and a step of heating the uncured coating film at a temperature of 75°C or more and 100°C or less to obtain a cured coating film. The resulting cured coating film has superior water resistance.

When a colored coating film is formed from the water-borne coating composition according to the present embodiment, a coated article is produced, for example, by a method including a step of applying the water-borne coating composition according to the present embodiment to an article to be coated to form an uncured colored coating film, a step of heating the uncured colored coating film at a temperature of 75°C or more and 100°C or less to form a cured colored coating film, a step of applying a clear coating composition to the colored coating film to form an uncured clear coating film, and a step of heating the uncured clear coating film to obtain a cured clear coating film.

When the clear coating film is formed, the colored coating film may have been cured or may be uncured. In particular, from the viewpoint of productivity, adhesion, and water resistance, it is preferable that coating films are laminated without being cured (so-called wet-on-wet coating), and then the plurality of uncured coating films are cured simultaneously. That is, the coated article may be produced by a method including a step of applying the water-borne coating composition according to the present embodiment to an article to be coated to form an uncured colored coating film, a step of applying a clear coating composition to the uncured colored coating film to form an uncured clear coating film, and a step of curing the uncured colored coating film and the uncured clear coating film.

Hereinafter, a case where the water-borne coating composition according to the present embodiment is used for formation of a colored coating film and is subjected to wet-on-wet coating will be described. However, the usage of the water-borne coating composition according to the present embodiment is not limited thereto.

(1) Forming uncured colored coating film

The water-borne coating composition according to the present embodiment is applied to an article to be coated. An uncured colored coating film is thereby formed. This step may be repeated multiple times before applying the clear coating composition. Thus, a plurality of uncured colored coating films are formed.

The colored coating film may be a single layer or a laminated coating film having two or more layers. The colored coating film may be a so-called intermediate coating film having one layer or two or more layers, may be a so-called base coating film having one layer or two or more layers, and may be a combination thereof. The intermediate coating film is typically formed adjacent to an article to be coated. The base coating film is typically formed on the intermediate coating film.

(Article to be coated)

Examples of the article to be coated in the above method include steel plates of metal such as iron, steel, stainless steel, aluminum, copper, zinc, and tin and alloys thereof; resins such as polyethylene resin, EVA resin, polyolefin resins (polyethylene resin, polypropylene resin, etc.), vinyl chloride resin, styrol resin, polyester resins (including PET resin, PBT resin, etc.), polycarbonate resin, acrylic resin, acrylonitrile-butadiene-styrene (ABS) resin, acrylonitrile-styrene (AS) resin, polyamide resin, acetal resin, phenol resin, fluororesin, melamine resin, urethane resin, epoxy resin, and polyphenylene oxide (PPO); and organic-inorganic hybrid materials. The article to be coated may have either a plate shape or a three-dimensional shape.

The metallic article to be coated may have been subjected to a chemical conversion treatment and electrodeposition coating in advance. Examples of the chemical conversion treatment include zinc phosphate conversion, zirconium conversion, and chromic acid conversion. The electrodeposition coating may be either cationic electrodeposition coating or anionic electrodeposition coating.

The resin article to be coated may have been subjected to degreasing treatment. The resin article to be coated may have been further coated with a primer coating material after the degreasing treatment. The primer coating material is not particularly limited, and may be appropriately chosen according to the type of the coating material to be applied thereon.

(Colored coating film)

The water-borne coating composition to be used for formation of a colored coating film contains a pigment. Examples of the pigment include coloring pigments, luster pigments, and extender pigments.

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylene-based pigments, dioxane-based pigments, quinacridone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

Examples of the luster pigment include metal flakes (aluminum, chromium, gold, silver, copper, brass, titanium, nickel, nickel chromium, stainless steel, and the like), metal oxide flakes, pearl pigments, glass flakes coated with metal or metal oxide, silica flakes coated with metal oxide, graphite, hologram pigments, and cholesteric liquid crystal polymers. These are used singly or two or more of them are used in combination.

Examples of the extender pigment include calcium carbonate, barium sulfate, clay, and talc. These are used singly or two or more of them are used in combination.

The concentration of all pigments, that is, the mass ratio (PWC) of all pigments to 100 mass% of the resin solid content of the water-borne coating composition is preferably 0.1 mass% or more and 50 mass% or less. Owing to this, the smoothness of a resulting coating film is improved. The PWC of each pigment is not particularly limited. The PWC of the luster pigment may be, for example, 1% by mass or more and 40% by mass or less. The PWC of the luster pigment is preferably 5% by mass or more. The PWC of the luster pigment is preferably 30 mass% or less.

The applying method is not limited. Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro bell (μμ bell)", "micro bell (μ bell)", "metallic bell", or the like is used.

After the water-borne coating composition is applied, preliminary drying (also referred to as preheating) may be carried out. At this time, the basic compound can be volatilized. In addition, bumping of the diluent component is inhibited, and the occurrence of bubbles is easily inhibited. Further, the mixing of an uncured colored coating film and a coating composition to be applied thereto is inhibited, so that it becomes difficult to form a mixed phase. Therefore, the smoothness of a resulting coated article is likely to be improved.

Conditions for the preliminary drying are not limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

The thickness of the intermediate coating film is not particularly limited. From the viewpoint of the smoothness and chipping resistance of the coated article, the thickness per layer of the intermediate coating film after curing is preferably 5 μm or more and 40 μm or less. The thickness per layer of the intermediate coating film after curing is more preferably 15 μm or more. The thickness per layer of the intermediate coating film after curing is more preferably 30 μm or less.

The thickness of the base coating film is not limited, and is appropriately set according to the purpose. The thickness per layer of the base coating film after curing is, for example, 10 μm or more, may be 15 μm or more, and may be 20 μm or more. The thickness per layer of the base coating film after curing is, for example, 50 μm or less, may be 45 μm or less, and may be 40 μm or less.

(2) Forming uncured clear coating film

A clear coating composition is applied to the uncured colored coating film. As a result, an uncured clear coating film is formed.

The clear coating composition is not limited. The clear coating composition comprises, for example, a hydroxy group-containing resin and a polyisocyanate curing agent. The hydroxyl value of the hydroxy group-containing resin may be 20 mg KOH/g or more and 200 mg KOH/g or less. The number average molecular weight of the hydroxy group-containing resin may be 1000 or more and 20000 or less. The polyisocyanate curing agent is not limited, and examples thereof include multimers and mixtures of aliphatic isocyanates, aliphatic cyclic isocyanates, aromatic isocyanates, alicyclic isocyanates, biurets and nurates thereof.

The clear coating composition to be used may be a commercially available product. Examples of the commercially available product include Polyure Excel O-1100 Clear and 0-1200 Clear (produced by Nippon Paint Automotive Coatings Co., Ltd., isocyanate-curing type clear coating compositions).

The applying method is not limited. Examples of the applying method include the same methods as the methods of applying the water-borne coating composition described above. Among them, rotary atomization type electrostatic coating is preferable from the viewpoint of coating efficiency. After applying the clear coating composition, preliminary drying may be carried out. The conditions for the preliminary drying are not particularly limited, and may be the same as those for the preliminary drying of the colored coating film.

(3) Curing step

Each uncured coating film is heated at a temperature of 75°C or more and 100°C or less.

The basic compound (C) volatilizes in at least one step selected from the group consisting of preliminary drying for the colored coating film, preliminary drying for the clear coating film, and heating in this curing step. That is, a cation derived from the basic compound is released from a neutralized carboxy group of the aqueous resin, and a carboxy group is regenerated. As a result, the aqueous resin and the hydrophilicized carbodiimide compound react with each other, so that the coating composition is cured.

The curing temperature may be 90°C or less. However, the water-borne coating composition according to the present embodiment may be cured at a higher temperature. The curing temperature is, for example, more than 100°C and not more than 120°C.

The heating time may be appropriately set according to the heating temperature. The heating time is, for example, 5 minutes or more and 60 minutes or less, and may be 10 minutes or more and 45 minutes or less. The heating time means a time during which the temperature in a heating device is maintained at a target temperature, and the time taken until the temperature reaches the target temperature is not considered. Examples of the heating device include a drying furnace using a heating source such as hot air, electricity, gas, or infrared rays.

EXAMPLES

The present invention will be described hereafter in more detail by way of examples, to which the present invention is not intended to be limited. In the examples, "parts" and "%" are on a mass basis unless otherwise indicated.

(Production of acrylic emulsion 1 having hydroxy group and carboxyl group)

A reaction vessel equipped with a stirrer, a nitrogen inlet tube, a temperature controller, a condenser, and a dropping funnel was charged with 607 parts of deionized water and 5 parts of LATEMUL PD-104 (produced by Kao Corporation, 20% aqueous solution) as an emulsifier, and then the mixture was heated to 80°C with stirring under a nitrogen atmosphere.

Separately, 191 parts of styrene, 61 parts of methyl methacrylate, 179 parts of 2-ethylhexyl acrylate, 46 parts of hydroxyethyl acrylate, 8 parts of methacrylic acid, and 15 parts of allyl methacrylate were added to and emulsified in an aqueous emulsifier solution obtained by mixing 45 parts of LATEMUL PD-104 with 271 parts of deionized water, affording a pre-emulsion.

The pre-emulsion was added dropwise over 2 hours to the reaction vessel together with an aqueous initiator solution obtained by dissolving 1.5 parts of ammonium persulfate in 204 parts of deionized water. After the completion

of the dropwise addition, the reaction was continued at 80°C for additional 2 hours. Thereafter, the mixture was cooled, and 0.8 parts of N,N-dimethylaminoether (corresponding to 10% of the acid value of the resin (neutralization rate: 10%)) was added thereto, affording acrylic emulsion 1 having a resin solid content of 30 mass%.

The hydroxyl value of the acrylic emulsion 1, in terms of resin solid content, calculated from the monomer composition was 40 mg KOH/g, and the acid value was calculated to be 10 mg KOH/g.

(Production of hydrophilicized carbodiimide compound)

By reacting 700 parts of 4,4-dicyclohexylmethane diisocyanate and 7 parts of 3-methyl 1-phenyl 2-phospholene-1 -oxide at 170°C for 7 hours, there was obtained a carbodiimide compound with the structure represented by the above formula (a) having three carbodiimide groups in one molecule and having isocyanate groups at its both ends.

Next, to 180 parts of the carbodiimide compound produced were added 95 parts of PTMG-1000 (polytetramethylene glycol having a number average molecular weight of 1000 produced by Mitsubishi Chemical; repeat number of tetramethylene oxide calculated from number average molecular weight was 13.6) and 0.2 parts of dibutyltin dilaurate, and the mixture was then heated to 85°C and held for 2 hours.

Subsequently, 86.4 parts of Methyl Poly Glycol 130 (polyethylene glycol monomethyl ether produced by Nippon Nyukazai Co., Ltd.; repeat number of ethylene oxide calculated from hydroxyl value of 130 mg KOH/g was 9) was added and then the mixture was held at 85°C for 3 hours. After confirming disappearance of a peak of NCO by IR measurement, the reaction was finished, followed by cooling to 60°C, and then deionized water was added, and thus an aqueous dispersion of a hydrophilicized carbodiimide compound having a resin solid content of 40% by mass was obtained. The resulting hydrophilicized carbodiimide compound was a compound represented by the above formula (I).

(Preparation of coloring pigment paste)

A commercially available dispersant "Disperbyk 190" (produced by BYK-Chemie GmbH) (9.2 parts), 17.8 parts of ion-exchanged water, and 73.0 parts of rutile type titanium dioxide were preliminarily mixed. Subsequently, using a paint conditioner, the preliminary mixture was mixed and dispersed together with a bead medium at room temperature until the particle size reached 5 μm or less, thereby affording a coloring pigment paste.

[Example 1]

(1) Preparation of water-borne coating composition

To a vessel equipped with a stirrer were added 100 parts of the acrylic emulsion 2 (resin solid content: 30%), 10 parts of a hydrophilicized carbodiimide compound (resin solid content: 40%), 10 parts (PWC: 12%) of ALPASTE MH-8801 (aluminum pigment produced by Asahi Kasei Corporation, solid content: 65%) as a luster pigment, and 0.3 parts of lauryl acid phosphate, and furthermore 30 parts of 2-ethylhexanol, 2 parts of ADEKA NOL UH-814N (viscosity control agent produced by ADEKA CORPORATION, solid content: 30%), 1 part of N,N-dimethylethanolamine (produced by Kishida Chemical Co., Ltd.), and 50 parts of ion-exchanged water were uniformly dispersed, affording a water-borne coating composition. The water-borne coating composition had a pH of 9.5.

(2) Formation of multilayer coating film

POWERNICS 150 (trade name, cationic electrodeposition coating material produced by Nippon Paint Automotive Coatings Co., Ltd.) was electrodeposition coated on a dull steel sheet treated with zinc phosphate such that the thickness of the dry coating film was 20 μm, followed by heat-curing at 160°C for 30 minutes and subsequent cooling, and thus a steel substrate was prepared.

The water-borne coating composition described above was applied to the prepared substrate with a rotary atomization type electrostatic applicator such that the dry film thickness was 15 μm. Subsequently, preheating was performed at 80°C for 3 minutes.

In addition, a clear coating material (Polyure Excel 0-1200 produced by Nippon Paint Automotive Coatings Co., Ltd., polyisocyanate compound-containing two-pack acrylic urethane-based organic solvent type clear coating material) was applied to the coated plate with a rotary atomization type electrostatic applicator such that the dry film thickness was 35 μm. Thereafter, heat curing was performed at 80°C for 20 minutes, affording a coated article having a cured multilayer coating film.

[Examples 2 to 4, Comparative Examples 1 to 5]

Water-borne coating compositions were prepared and coated articles were obtained in the same manner as in Example 1 except that the composition of the water-borne coating composition was changed to the components and their blending amounts as shown in the following table.

[Evaluation]

The following evaluation tests were performed on the water-borne coating compositions and the coated articles. The results of the evaluations are shown in Table 1.

(1) Storage stability

A coating composition was prepared, and then left at 40°C for 10 days. When a lump having no fluidity was formed in the coating composition or the viscosity of the entire coating composition was 0% or less or 150% or more as compared with the initial viscosity, the storage stability of the coating composition was evaluated as "poor (x)", and otherwise was evaluated as "good (◦)".

(2) Water resistance

A coated article was immersed in warm water at 40°C for 240 hours. Thereafter, the coated article was pulled up and dried at 20°C for 24 hours. Subsequently, lattice-like cuts were made on the multilayer coating film of the coated article with a utility knife to reach the base material, and the multilayer coating film was thereby divided into 100 lattice cells with a size of 2 mm × 2 mm. Next, an adhesive cellophane tape(trademark) was stuck to the surface of the lattice cells, and then the tape was rapidly peeled off at 20°C. The number of the lattice cells from which the multilayer coating film was peeled off was counted. The smaller the number, the better the water resistance.

Good (◦): There is no lattice cells from which the multilayer coating film was peeled off.
Poor (x): The number of the lattice cells from which the multilayer coating film was peeled off is 1 or more.

[Table 1]

| | | Comparative Example 1 | Comparative Example 2 | Example 1 | Example 2 | Example 3 | Comparative Example 3 | Example 4 | Comparative Example 4 | Comparative Example 5 |
|---|---|---|---|---|---|---|---|---|---|---|
| Water-borne coating compositio n | Tg (°C) of aqueous resin | -10 | -10 | 10 | 10 | 10 | 10 | 10 | -10 | 30 |
| | Carbodiimide compound (parts) | 0 | 11 | 11 | 11 | 11 | 11 | 11 | 11 | 11 |
| | Basic compound (parts) | 1 | 1.12 | 1.46 | 1.83 | 3.33 | 7.05 | 1.83 | 1.83 | 1.83 |
| | Ec/Ea | 0 | 1 | 1 | 1 | 1 | 1 | 1 | 1 | 1 |
| | pH of coating composition | 8 | 8.2 | 8.5 | 9 | 9.5 | 10 | 9 | 9 | 9 |
| Evaluation | Storage stability of base coating material | ○ | × | ○ | ○ | ○ | ○ | ○ | ○ | ○ |
| | Water resistance | × | × | ○ | ○ | ○ | × | ○ | × | × |

The water-borne coating compositions of Examples are superior in storage stability, and can form a coating film having superior water resistance even when cured under a low temperature condition of 80°C.

On the other hand, since the water-borne coating composition of Comparative Example 1 does not contain a hydrophilicized carbodiimide compound, it is superior in storage stability. However, since the Tg of the aqueous resin is lower than 0°C, the water resistance of the multilayer coating film is low. Since the water-borne coating composition of Comparative Example 2 has a pH of less than 8.5, it is poor in storage stability. Furthermore, since the Tg of the aqueous resin is lower than 0°C, the water resistance of the multilayer coating film is also low. The water-borne coating composition of Comparative Example 3 is superior in storage stability, but has a high pH, so that the water resistance of the multilayer coating film is low. Since the water-borne coating compositions of Comparative Examples 4 and 5 have a pH of 8.5 or more and less than 10, they are superior in storage stability. On the other hand, since the Tg of the aqueous resin is not in the range of 0 to 20°C, the multilayer coating films are low in water resistance.

INDUSTRIAL APPLICABILITY

The water-borne coating composition of the present invention is superior in storage stability and can be cured at low temperatures, and therefore can be used for various applications.

This application claims priority based on Japanese Patent Application No. 2021-211198, which was filed in Japan on December 24, 2021, the disclosure of which application is incorporated herein by reference in its entirety.

## Claims

1. A one-pack type water-borne coating composition comprising:

   an aqueous resin (A) having a hydroxy group and a carboxy group;
   a hydrophilicized carbodiimide compound(B); and
   a basic compound(C), wherein
   the aqueous resin (A) has a glass transition point of 0°C or more and 20°C or less,
   the hydrophilicized carbodiimide compound (B) has, in a molecule, at least one carbodiimide group and a structure resulting from elimination of a hydroxy group from a polyalkylene glycol monoalkyl ether,
   the water-borne coating composition has a pH of 8.5 or more and less than 10, and
   the water-borne coating composition contains no polyisocyanate curing agent, or contains less than 1 part by mass of a polyisocyanate curing agent based on 100 parts by mass of a solid content of the water-borne coating composition.

2. The water-borne coating composition according to claim 1, wherein a content of the basic compound (C) is 1 part by mass or more and 10 parts by mass or less based on 100 parts by mass of the solid content of the water-borne coating composition.

3. The water-borne coating composition according to claim 1 or 2, wherein the basic compound (C) has a boiling point of 180°C or lower.

4. The water-borne coating composition according to any one of claims 1 to 3, wherein the basic compound (C) includes at least one compound selected from the group consisting of ammonia and amine compounds.

5. The water-borne coating composition according to any one of claims 1 to 4, wherein the aqueous resin (A) has a hydroxyl value of 20 mg KOH/g or more and 100 mg KOH/g or less and an acid value of 5 mg KOH/g or more and 80 mg KOH/g or less in terms of resin solid content.

6. The water-borne coating composition according to any one of claims 1 to 5, wherein a ratio: Ec/Ea of an equivalent Ec of carbodiimide groups of the hydrophilicized carbodiimide compound (B) to an equivalent Ea of acid groups of the aqueous resin (A) is 0.1 or more and 1.5 or less.

7. The water-borne coating composition according to any one of claims 1 to 6, wherein a content of the aqueous resin (A) is 30 parts by mass or more and 75 parts by mass or less based on 100 parts by mass of the solid content of the water-borne coating composition.

8. The water-borne coating composition according to any one of claims 1 to 7, wherein a content of the hydrophilicized

carbodiimide compound (B) is 5 parts by mass or more and 15 parts by mass or less based on 100 parts by mass of the solid content of the water-borne coating composition.

**9.** The water-borne coating composition according to any one of claims 1 to 8,

wherein the hydrophilicized carbodiimide compound (B) has one or more structural units represented by the following general formula ($\alpha$):

-OCONH-X-Q-Y ($\alpha$)

wherein X is independently at each occurrence a bifunctional organic group containing at least one carbodiimide group, Y independently at each occurrence has a structure resulting from elimination of a hydroxy group from a polyalkylene glycol monoalkyl ether, and Q is -NHCOO- or -NHCONH-.

**10.** The water-borne coating composition according to any one of claims 1 to 9, wherein the hydrophilicized carbodiimide compound (B) includes at least one compound selected from the group consisting of:

a compound represented by the following general formula (I):

[Chemical Formula 1]

YOCONH—X—NHCOO—Z—OCONH—X—NHCOOY (I)

wherein X independently at each occurrence represents a bifunctional organic group containing at least one carbodiimide group, Y independently at each occurrence represents a structure resulting from elimination of a hydroxy group from a polyalkylene glycol monoalkyl ether, and Z has a structure resulting from elimination of a hydroxy group from a bifunctional polyol having a number average molecular weight of 200 or more and 5000 or less,
a compound represented by the following general formula (II):

[Chemical Formula 2]

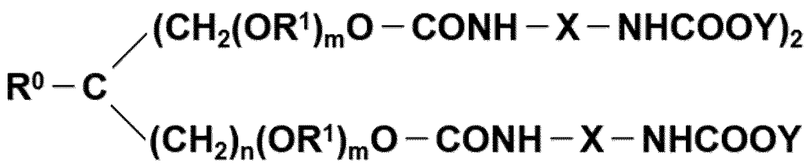

(II)

wherein X is independently at each occurrence a bifunctional organic group containing at least one carbodiimide group, Y independently at each occurrence has a structure resulting from elimination of a hydroxy group from a polyalkylene glycol monoalkyl ether, $R^0$ is hydrogen, a methyl group, or an ethyl group, $R^1$ is independently at each occurrence an alkylene group having 4 or less carbon atoms, n is 0 or 1, and m is 0 to 60; and
a compound represented by the following general formula (III):

[Chemical Formula 3]

YOCONH—X—NHCOOY (III)

wherein X is independently at each occurrence a bifunctional organic group containing at least one carbodiimide group, and Y independently at each occurrence has a structure resulting from elimination of a hydroxy group from a polyalkylene glycol monoalkyl ether.

**11.** A method for producing a coated article, the method comprising:

applying the water-borne coating composition according to any one of claims 1 to 10 to an article to be coated to form an uncured coating film; and
heating the uncured coating film at a temperature of 75°C or more and 100°C or less to obtain a cured coating film.

**INTERNATIONAL SEARCH REPORT**

International application No. **PCT/JP2022/041166**

**A. CLASSIFICATION OF SUBJECT MATTER**

***B05D 3/00***(2006.01)i; ***B05D 3/02***(2006.01)i; ***B05D 7/24***(2006.01)i; ***C08F 20/10***(2006.01)i; ***C09D 201/06***(2006.01)i; ***C09D 7/60***(2018.01)i; ***C09D 7/65***(2018.01)i

FI: C09D201/06; B05D3/00 D; B05D3/02 Z; B05D7/24 302R; B05D7/24 302T; B05D7/24 302X; B05D7/24 303A; B05D7/24 303E; C08F20/10; C09D7/60; C09D7/65

According to International Patent Classification (IPC) or to both national classification and IPC

**B. FIELDS SEARCHED**

Minimum documentation searched (classification system followed by classification symbols)

C09D1/00-10/00; C09D101/00-201/10; B05D3/00; B05D3/02; B05D7/24; C08F20/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-143320 A (FUJIKURA KASEI CO LTD) 24 September 2021 (2021-09-24) paragraphs [0009], [0012]-[0016] | 1-11 |
| Y | WO 2017/131101 A1 (NIPPON PAINT AUTOMOTIVE COATINGS CO., LTD.) 03 August 2017 (2017-08-03) paragraphs [0056]-[0103] | 1-11 |
| Y | JP 2014-214219 A (TOYO INK SC HOLDINGS CO., LTD.) 17 November 2014 (2014-11-17) paragraph [0041] | 1-11 |
| A | WO 2011/135993 A1 (MITSUBISHI PLASTICS, INC) 03 November 2011 (2011-11-03) paragraph [0049] | 1-11 |
| A | JP 2019-6036 A (NIPPON STEEL & SUMIKIN SST) 17 January 2019 (2019-01-17) paragraph [0058] | 3 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/041166**

C. DOCUMENTS CONSIDERED TO BE RELEVANT

| Category* | Citation of document, with indication, where appropriate, of the relevant passages | Relevant to claim No. |
|---|---|---|
| A | US 2011/0217471 A1 (SCHWENDEMAN, Irina G.) 08 September 2011 (2011-09-08) entire text | 1-11 |
| A | CN 102134296 A (JIANGSU KANGTAI FLUORINE CHEMICAL CO., LTD.) 27 July 2011 (2011-07-27) entire text | 1-11 |
| A | CN 105176365 A (YIPS INK (ZHONGSHAN) CO., LTD.) 23 December 2015 (2015-12-23) entire text | 1-11 |
| A | JP 2008-115254 A (FUJIKURA KASEI CO LTD) 22 May 2008 (2008-05-22) entire text | 1-11 |

Form PCT/ISA/210 (second sheet) (January 2015)

**INTERNATIONAL SEARCH REPORT**
**Information on patent family members**

International application No.
**PCT/JP2022/041166**

| Patent document cited in search report | Publication date (day/month/year) | Patent family member(s) | Publication date (day/month/year) |
|---|---|---|---|
| JP 2021-143320 A | 24 September 2021 | (Family: none) | |
| WO 2017/131101 A1 | 03 August 2017 | US 2019/0031915 A1<br>paragraphs [0105]-[0154]<br>EP 3409378 A1<br>CN 108883432 A | |
| JP 2014-214219 A | 17 November 2014 | US 2016/0068719 A1<br>paragraphs [0065]-[0071]<br>WO 2014/175341 A1<br>JP 5348343 B1<br>EP 2990454 A1<br>CN 105143384 A | |
| WO 2011/135993 A1 | 03 November 2011 | US 2013/0095325 A1<br>paragraph [0067]<br>KR 10-2013-0097060 A<br>JP 2011-230415 A<br>EP 2565034 A1<br>CN 102844188 A | |
| JP 2019-6036 A | 17 January 2019 | (Family: none) | |
| US 2011/0217471 A1 | 08 September 2011 | WO 2011/109386 A1<br>EP 2542601 A1<br>CN 102869694 A | |
| CN 102134296 A | 27 July 2011 | (Family: none) | |
| CN 105176365 A | 23 December 2015 | (Family: none) | |
| JP 2008-115254 A | 22 May 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021143320 A
- JP 2018104605 A
- JP 2021211198 A